# FASCICULE DE BREVET EUROPEEN

(11) **EP 1 401 235 B1**
(45) Date de publication et mention de la délivrance du brevet: **07.06.2006**
(21) Numéro de dépôt: 03291877.3
(22) Date de dépôt: 29.07.2003
(51) Int. Cl.: H04Q 11/00

(54) **Brasseur optique d'architecture multigranulaire**
Optischer Crossconnect mit einer multigranularen Architektur
Optical crossconnect with a multigranular architecture

(30) Priorité: 19.09.2002 FR 0211598
(43) Date de publication de la demande: 24.03.2004
(73) Titulaire: ALCATEL, 75008 Paris (FR)
(72) Inventeur: Penninckx, Denis, 91620 Nozay (FR); Noirie, Ludovic, 91620 Nozay (FR)
(74) Mandataire: Chaffraix, Sylvain

(56) Documents cités:
- EP-A- 1 193 996
- NOIRIE L ET AL: "Multigranularity optical cross-connect" ECOC 2000. 26TH EUROPEAN CONFERENCE ON OPTICAL COMMUNICATION, PROCEEDINGS OF 26TH EUROPEAN CONFERENCE ON OPTICAL COMMUNICATION, MUNICH, GERMANY, 3-7 SEPT. 2000, pages 269-270 vol.3, XP002241353 2000, Berlin, Germany, VDE Verlag, Germany ISBN: 3-8007-2567-3
- JINNO M ET AL: "ULTRA-WIDE-BAND WDM NETWORKS AND SUPPORTING TECHNOLOGIES" PROCEEDINGS OF THE EUROPEAN CONFERENCE ON NETWORKS AND OPTICAL COMMUNICATIONS 1999. NOC'99. CORE NETWORKS AND NETWORK MANAGEMENT, AMSTERDAM: IOS PRESS, NL, vol. PART 2, 1999, pages 90-97, XP000829416 ISBN: 90-5199-497-4
- JUE J P ET AL: "A NEW MODE ARCHITECTURE FOR SCALABLE WDM OPTICAL NETWORKS" ICC '99. 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY: IEEE, US, vol. 3, 6 juin 1999 (1999-06-06), pages 1714-1718, XP000903663 ISBN: 0-7803-5285-8
- TADA N ET AL: "PHOTONIC TERABITS IP-ROUTERS USING TWO DIMENSIONAL INTERCONNECTION BASED ON MATRIX WDM SCHEME" 25TH EUROPEAN CONFERENCE ON OPTICAL COMMUNICATION. (ECOC'99). NICE, FRANCE, SEPT. 27 - 30, 1999. REGULAR AND INVITED PAPERS, EUROPEAN CONFERENCE ON OPTICAL COMMUNICATION (ECOC), PARIS: SEE, FR, vol. I OF II, 26 septembre 1999 (1999-09-26), pages I-450-I-451, XP001035390 ISBN: 2-912328-12-8

## Description

La présente invention concerne un brasseur optique d'architecture multigranulaire destiné à être utilisé dans un noeud de communication d'un réseau de télécommunications optiques.

Les réseaux de télécommunications optiques sont destinés à véhiculer des trafics de données numériques très importants sur des échelles continentales et intercontinentales, par exemple pour des applications multimédia sur Internet. La technologie optique permet actuellement d'assurer des débits de l'ordre du Tera (10¹²) bits par second sur une fibre, sans atteindre les limites théoriques qui sont bien supérieures. Elle est donc la solution d'avenir pour l'échange d'informations à forte densité, notamment pour la voix et la vidéo.

Les réseaux de télécommunications optiques connus utilisant le principe de la commutation comportent des noeuds de communication munis de brasseurs rapides pour aiguiller des groupes de signaux optiques porteurs de données numériques, généralement par modulation d'amplitude d'ondes porteuses optiques.

Le document intitulé « Multi-Granularity Optical Cross-Connect » L. Noirie et autres, Paper 9.2.4, European Conference on Optical Communication 2001, Munich Germany, 3-7 Septembre 2000, pages 269-270 présente un brasseur optique à trois degrés de granularité c'est-à-dire capable de router des groupes de données à destination commune par longueur d'onde, par bande de longueurs d'onde et par fibre optique.

Cette approche multigranulaire permet d'accroître la capacité du réseau de transmission tout en gardant un degré de complexité raisonnable pour la commutation.

Un tel brasseur comprend trois étages de commutation optique : un étage dédié longueurs d'onde, un étage dédié bandes de longueurs d'onde et un étage dédié fibres optiques. Chaque étage utilise une matrice de commutation optique qui a pour fonction d'orienter des groupes de signaux optiques numériques au moyen respectivement d'un ensemble de ports d'entrée et de ports de sortie.

La matrice de commutation optique en bande de longueurs d'onde comprend des premiers ports d'entrée qui ont chacun pour fonction de recevoir des signaux optiques numériques groupés dans une même bande de longueurs d'onde et venant de l'étage dédié fibres optiques. de même cette matrice comprend des premiers ports de sortie qui servent chacun à délivrer des signaux optiques groupés dans une même bande de longueurs d'onde destinée à l'étage dédié fibre optique.

Cette matrice de commutation optique en bande de longueurs d'onde comprend, dans l'un des modes de réalisation présentés, des deuxièmes ports de sortie qui sont connectés à des premiers ports d'entrée de la matrice de commutation optique en longueur d'onde via des moyens de démultiplexage en longueur d'onde. De même, cette matrice comprend des deuxièmes ports d'entrée qui sont connectés à des premiers ports de sortie de la matrice de commutation optique en longueur d'onde via des moyens de multiplexage en longueur d'onde.

Grâce à ces connexions directes entre l'étage dédié bandes de longueurs d'onde et l'étage dédié longueurs d'onde, il est possible de réaliser en dynamique des réarrangements (de l'anglais grooming) des données entre bandes distinctes (transfert de données, échange de données etc...).

Par ailleurs, la matrice de commutation en bande de longueurs d'onde comprend des troisièmes ports d'entrée aptes à recevoir des bandes de longueurs d'onde émises par un réseau local connecté au noeud de communication associé au brasseur ainsi que des troisièmes ports de sortie aptes à transmettre des bandes de longueurs d'onde à ce réseau local. La matrice de commutation en longueurs d'onde comprend également ce type de ports d'entrée et de ports de sortie.

Ainsi, ces matrices de commutation optique en bande de longueurs d'onde et en longueur d'onde comportent un nombre important de ports d'entrée et de ports de sortie, ce qui augmente leur coût de fabrication tout comme le coût de leurs interfaces.

Par ailleurs, au sein de la matrice de commutation optique en bande de longueurs d'onde, tous les chemins optiques entre les ports d'entrée et les ports de sortie ne sont pas autorisés, sous peine de mélange. En effet, il n'existe pas actuellement de moyens de conversion en bande de longueurs d'onde nécessaires pour réarranger directement les données entre bandes distinctes. Une matrice de commutation optique en bande de longueurs d'onde de grande taille est donc peu avantageuse.

La présente invention a pour but de fournir un brasseur optique d'architecture multigranulaire ayant au moins un étage de commutation en longueur d'onde et un étage de commutation en bande de longueurs d'onde, peu onéreux et adapté à tout type de trafic et de préférence adapté pour des réarrangements entre bandes distinctes.

A cet effet, l'invention fournit un brasseur optique d'architecture multigranulaire du type décrit dans l'article " Multi-Granularity Optical Cross-Connect" précité et conforme au préambule de la revendication 1. Il se distingue de cet état de la technique par l'ensemble des caractéristiques de la partie caractérisant de la revendication 1.

L'emploi de sous matrices, de petites tailles, permet d'économiser des ports sans dégrader les performances du brasseur selon l'invention.

Chaque sous matrice à redirection est associée à une deuxième sous matrice prédéterminée. Cela permet par exemple des réarrangements entre données de bandes de longueurs d'onde identiques mais transmises par des fibres distinctes.

De préférence, au moins deux des deuxièmes sous matrices comprennent chacune au moins un port de communication inter matrice d'entrée et au moins un port de communication inter matrice de sortie, chaque port de communication inter matrice d'entrée étant apte à recevoir un signal porteur d'informations issu d'une desdites deuxièmes sous matrices et chaque port de communication inter matrice de sortie étant apte à délivrer un signal porteur d'informations destiné à l'une desdites deuxièmes sous matrices.

Le signal porteur d'informations, peut être optique ou électrique, numérique ou analogique suivant la nature des deuxièmes sous matrices et suivant leurs interfaces.

Les ports de communication inter matrice d'entrée et de sortie permettent de convertir une ou plusieurs longueurs d'onde d'une bande en une autre bande et donc de réarranger les informations entre bandes, par exemple pour remplir une bande partiellement inoccupée.

De manière avantageuse, pour le bon acheminement des signaux porteurs d'informations, le brasseur peut comporter un moyen de commutation dit inter matrice couplant l'ensemble des ports de communication inter matrice d'entrée avec l'ensemble des ports de communication inter matrice de sortie.

Dans un mode de réalisation préféré, les signaux porteurs d'informations sont optiques et le brasseur comprend un concentrateur optique de signaux optiques couplant l'ensemble des ports de communication inter matrice de sortie avec les entrées du moyen de commutation inter matrice et un déconcentrateur optique de signaux optiques couplant les sorties du moyen de commutation inter matrice avec l'ensemble des ports de communication inter matrice d'entrée.

Si tous les ports de communication inter matrice ne sont pas susceptibles d'être utilisés simultanément, on peut réduire si nécessaire le nombre d'entrées et de sorties du moyen de commutation inter matrice à l'aide des concentrateur et déconcentrateur selon l'invention.

Dans un premier mode de réalisation de l'invention, les signaux porteurs d'informations sont optiques et le moyen de commutation inter matrice comprend des moyens de conversion en longueur d'onde.

Dans un deuxième mode de réalisation de l'invention, les signaux porteurs d'informations étant optiques, le brasseur comprend des moyens de conversion en longueur d'onde et de préférence des régénérateurs de type 3R lorsque lesdits signaux sont numériques, lesdits moyens étant disposés entre les ports d'aiguillages de sortie des deuxièmes sous matrices et les moyens de multiplexage en longueur d'onde.

Un régénérateur de type 3R (3R pour Retiming, Reshaping, Reamplification en anglais) assure la fonction de conversion en longueur d'onde en même temps que les fonctions de resynchronisation, de remise en forme et de réamplification d'un signal optique numérique.

Lorsque les deuxièmes sous matrices sont électriques, des convertisseurs optiques-électriques et des convertisseurs électriques-optiques peuvent être disposés respectivement au moins au niveau des ports d'aiguillage d'entrée et au moins au niveau des ports d'aiguillage de sortie desdites deuxièmes sous matrices.

De préférence, le brasseur peut comprendre un concentrateur optique dont des entrées sont connectées à un ensemble de ports de sortie, dits ports d'extraction, des deuxièmes sous matrices, et un déconcentrateur optique dont des sorties sont connectées à un ensemble de ports d'entrée, dits ports d'insertion, des deuxièmes sous matrices.

Les caractéristiques et objets de la présente invention ressortiront de la description détaillée donnée ci-après en regard des figures annexées, présentées à titre illustratif et nullement limitatif. Dans ces figures :
- la figure 1 représente schématiquement, dans un premier mode de réalisation préféré de l'invention, un brasseur optique 1000 de signaux optiques numériques,
- la figure 2 représente schématiquement, dans un second mode de réalisation préféré de l'invention, un brasseur optique 2000 de signaux optiques numériques,
- la figure 3 représente schématiquement, dans un troisième mode de réalisation préféré de l'invention, un brasseur optique 3000 de signaux numériques sous forme optique ou électrique.

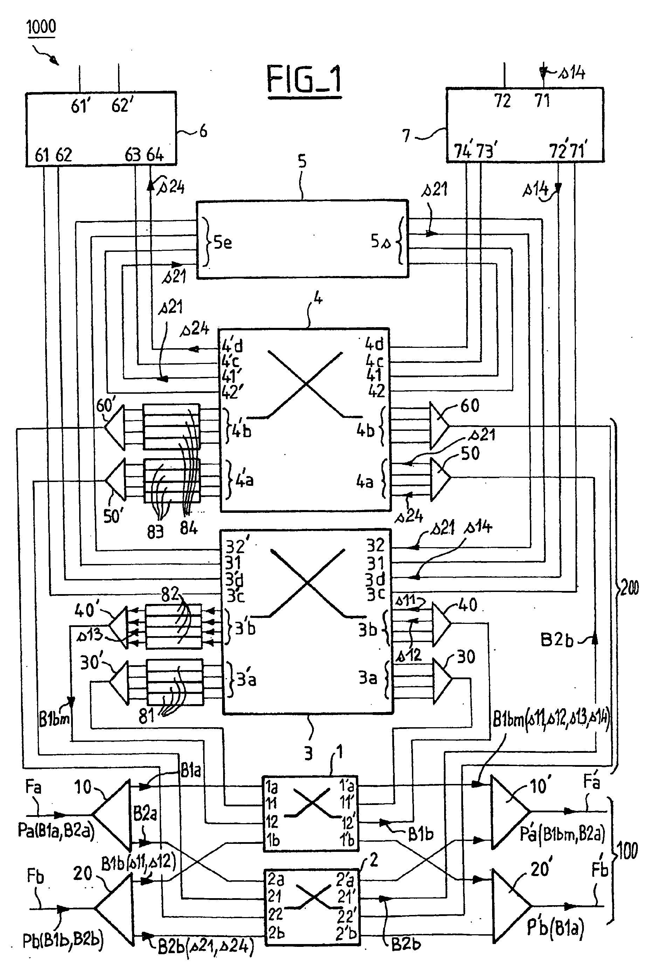

La figure 1 représente schématiquement, dans un premier mode de réalisation préféré de l'invention, un brasseur optique 1000 de signaux optiques porteurs d'informations, par exemple sous forme de données numérique, brasseur d'architecture multigranulaire. Chaque signal optique numérique est sous forme d'une onde optique porteuse modulée par exemple en amplitude.

Le brasseur 1000 comporte un premier étage 100 pour la commutation en bande de longueurs d'onde et un deuxième étage 200 pour la commutation en longueur d'onde.

Le premier étage 100 comporte une matrice optique de commutation en bande de longueurs d'onde, sous forme d'une série de deux premières sous matrices optiques de commutation 1, 2 disposées en parallèle. Chacune est dédiée à une bande distincte de longueurs d'onde B1, B2 respectivement, lesquelles comprennent chacune par exemple quatre longueurs d'onde λ11, λ12, λ13, λ14 et λ21, λ22, λ23, λ24 respectivement utilisables pour porter des données numériques.

Les premières sous matrices, dites sous matrices à redirection, 1, 2 comprennent deux ports d'aiguillage d'entrée 1a, 1b et 2a, 2b respectivement et deux ports d'aiguillage de sortie 1'a, 1'b et 2'a, 2'b respectivement.

Le nombre de ports d'aiguillage d'entrée et de ports d'aiguillage de sortie correspond au nombre de fibres optiques d'entrée Fa, Fb et de fibres optiques de sorties F'a, F'b connectées via des moyens de démultiplexage en bande de longueurs d'onde 10, 20 et des moyens de multiplexage en bande de longueurs d'onde 10', 20' à ces ports d'aiguillage.

L'invention s'applique aussi dans le cas où intervient une seule fibre d'entrée et une seule fibre de sortie. La ou les fibres d'entrée et la ou les fibres de sortie peuvent être directement les fibres optiques de lignes ou bien des fibres de liaisons dans le cas où le brasseur 1000 comporte un étage dédié fibre, par exemple analogue à celui de l'art antérieur.

En outre, les sous matrices à redirection 1, 2 comprennent deux ports de redirection d'entrée 11, 12 et 21, 22 respectivement et deux ports de redirection de sortie 11', 12' et 21', 22' respectivement.

L'une et/ou l'autre des sous matrices à redirection pourrait ne comporter qu'un seul port de redirection d'entrée et un seul port de redirection de sortie. Le choix de ce dimensionnement dépend des paramètres du réseau.

De plus, dans le cas où les fibres d'entrée et de sortie transportent plus de deux bandes de longueurs d'onde, une ou plusieurs autres premières sous matrices optiques de commutation sont rajoutées et disposées en parallèle et ne comportent pas nécessairement de ports de redirection.

En outre, l'une et/ou l'autre des sous matrices à redirection 1, 2 peut être munie, en entrée, d'un ou plusieurs ports d'insertion de bandes et, en sortie, d'un ou plusieurs ports d'extraction de bandes (non représentés).

Le deuxième étage 200 comporte une matrice optique de commutation en longueur d'onde, sous forme d'une série de deux deuxièmes sous matrices optiques 3, 4 respectivement couplées à une sous matrice à redirection distincte 1, 2.

En effet, côté entrée, les deuxièmes sous matrices 3, 4 comportent deux groupes de quatre ports d'aiguillage d'entrée 3a, 3b et 4a, 4b respectivement, lesquels sont connectés à des ports de redirection de sortie distincts 11', 12' et 21', 22' respectivement via des moyens de démultiplexage en longueur d'onde 30, 40 et 50, 60 respectivement.

Et, côté sortie, les deuxièmes sous matrices 3, 4 comportent deux groupes de quatre ports d'aiguillage de sortie 3'a, 3'b et 4'a, 4'b respectivement, lesquels sont connectés à des ports de redirection de sortie distincts 11, 12 et 21, 22 respectivement via des moyens de démultiplexage en longueur d'onde 30', 40' et 50', 60'.

Par ailleurs, les deuxièmes sous matrices 3, 4 comportent, en entrée, deux ports d'insertion de longueurs d'onde 3c, 3d et 4c, 4d respectivement. Le nombre de ports d'insertion peut être fixé entre un et huit, huit correspondant au nombre maximal possible de longueurs d'onde passant par les deux ports de redirection.

Les deuxièmes sous matrices 3, 4 comportent, en sortie, deux ports d'extraction de longueurs d'onde 3'c, 3'd et 4'c, 4'd respectivement.

L'ensemble des ports d'insertion 3c, 3d, 4c, 4d est connecté aux sorties 71' à 74' d'un déconcentrateur optique 7 ayant deux entrées 71, 72 reliées à un réseau local (non représenté).

L'ensemble des ports d'extraction 3'c, 3'd, 4'c, 4'd est connecté aux entrées 61 à 64 d'un concentrateur optique 6 ayant deux sorties 61', 62' vers un réseau local (non représenté).

Enfin, les deuxièmes sous matrices 3, 4 comportent deux ports dits de communication inter matrice d'entrée 31, 32 et 41, 42 respectivement et deux ports dits de communication inter matrice de sortie 31', 32' et 41', 42' respectivement. Le nombre de ports de communication inter matrice peut être fixé entre un et huit en fonction des besoins.

Chaque port de communication inter matrice d'entrée de l'une ou l'autre des deuxièmes sous matrices est apte à recevoir un signal optique numérique issu d'une des deuxièmes sous matrices distincte 3, 4 de même que chaque port de communication inter matrice de sortie de l'une ou l'autre des deuxièmes sous matrices 3, 4 est apte à délivrer un signal optique numérique destiné à une autre desdites deuxièmes sous-matrices.

Un moyen optique de commutation dit inter matrice 5 couple l'ensemble des ports de communication inter matrice d'entrée 31, 32, 41, 42, connecté à ses entrées 5e, avec l'ensemble desdits ports de communication inter matrice de sortie 31', 32', 41', 42'; connecté à ses sorties 5s.

Quatre séries de quatre régénérateurs de type 3R 81 à 84 sont disposées entre les ports d'aiguillages de sortie 3'a à 4'b de deuxièmes sous matrices 3, 4 et les moyens de multiplexage en longueur d'onde 30' à 60'.

Décrivons un exemple de fonctionnement du brasseur 1000.

Deux groupes Pa, Pb de signaux optiques numériques véhiculés par la fibre Fa, Fb comportent les mêmes deux bandes de longueurs d'onde B1, B2.

Les signaux des groupes Pa, Pb sont démultiplexés par bande par les moyens de démultiplexage en bande de longueurs d'onde 10, 20. Les signaux groupés par bande sont dits des signaux composites B1a, B2a, B1b, B2b et sont symbolisés sur la figure 1 en référence à leur bande.

Les signaux composites B1a, B2a sont aiguillés par la première sous-matrice dédiée à leur bande 1, 2 respectivement et débouchent sur un moyen de multiplexage en bande de longueurs d'onde 20', 10'.

Le signal composite B1 b, délivré par le port de redirection de sortie 12', traverse le moyen de démultiplexage en longueur d'onde 40 le séparant en deux signaux optiques numériques s11, s12 de longueur d'onde porteuse distincte λ11, λ12. Ces signaux numériques s11, s12 sont dirigés vers deux ports d'aiguillage de sortie du groupe 3'b.

Un signal optique numérique s14 de longueur d'onde porteuse par exemple égale à λ14 traverse le déconcentrateur optique 7 et est injecté dans la deuxième sous matrice 3 via le port d'insertion 3d et ressort via un port d'aiguillage de sortie du groupe 3'b.

Le signal composite B2b, délivré par le port de redirection de sortie 21', traverse le moyen de démultiplexage en longueur d'onde 50 le séparant en deux signaux optiques numériques s21, s24 de longueur d'onde porteuse distincte λ21, λ24.

Le signal numérique s21, délivré par l'un des ports communication inter matrice de sortie 41' de la deuxième sous matrice 4, traverse le moyen de commutation optique inter matrice 5 qui l'aiguille vers l'un des ports communication inter matrice d'entrée 32 de la deuxième sous matrice 3.

Le signal numérique s24 est délivré par l'un des ports d'extraction 4'd de la deuxième sous matrice 4 au concentrateur 6.

Côté sortie de la deuxième sous matrice 3, les signaux numériques s11, s12, s21, s14 traversent chacun un moyen de régénération optique de type 3R de la série 82. Le signal s21 est converti en un signal optique numérique s13 porteur des données mais à la longueur d'onde λ13. Ces signaux s11, s12, s13, s14 sont multiplexés par le moyen de multiplexage en longueur d'onde 40' pour former un signal composite réarrangé B1 bm.

Deux groupes P'a, P'b de signaux sont formés par les moyens de multiplexage en bande de longueurs d'onde 10', 20' à partir des signaux composites B1bm, B2a et B1a respectivement.

Dans une variante de ce premier mode de réalisation, les signaux optiques sont analogiques auquel cas les régénérateurs 3R sont remplacés par des simples moyens de conversion en longueur d'onde avec éventuelle régénération.

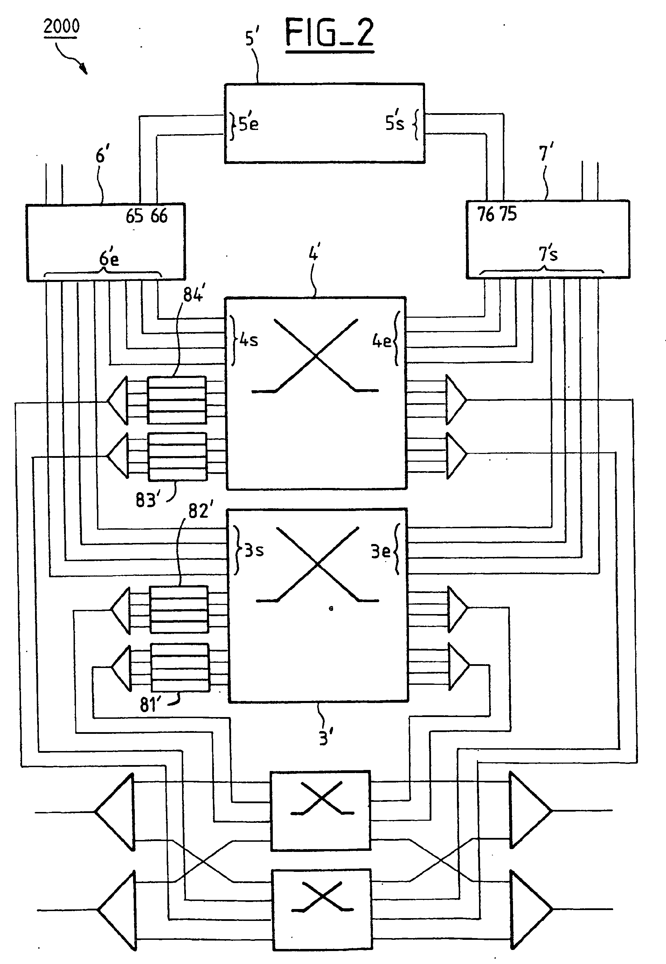

La figure 2 représente schématiquement, dans un second mode de réalisation préféré de l'invention, un brasseur optique 2000 de signaux optiques numériques.

Seuls les éléments différents des éléments du premier mode de réalisation sont référencés.

Le brasseur optique 2000 comporte une matrice optique de commutation, sous forme d'une série de deux deuxièmes sous matrices optiques 3', 4' respectivement couplées à une sous matrice à redirection distincte.

L'une des deuxièmes sous matrices 3' comporte :
- quatre ports d'entrée 3e utilisés soit comme des ports d'insertion de longueurs d'onde soit comme des ports de communication inter matrice d'entrée,
- quatre ports de sortie 3s utilisés soit comme des ports d'extraction de longueurs d'onde soit comme des ports de communication inter matrice de sortie.

De la même façon, l'autre des deuxièmes sous matrices 4' comporte par exemple quatre ports d'entrée 4e et quatre ports de sortie 4s à double fonction.

L'ensemble des ports de sortie (hors ports d'aiguillage) 3s, 4s, est connecté aux entrées 6'e d'un concentrateur optique 6' relié en sortie à un réseau local (non représenté). Deux sorties 65, 66, utilisées pour la circulation de signaux optiques numériques entre sous matrices, sont connectées aux entrées d'un moyen optique de commutation inter matrice 5' dont les deux sorties 5's sont reliées aux entrées 75, 76 d'un déconcentrateur optique 7' relié par ailleurs en entrée à un réseau local (non représenté). L'ensemble des ports d'entrée (hors ports d'aiguillage) 3e, 4e, est connecté aux sorties 7's du déconcentrateur optique 7'.

Le moyen optique de commutation inter matrice 5' est muni de moyens de conversion en longueur d'onde (non représentés) pour des réarrangements de données par exemple entre bandes distinctes.

En outre, les quatre séries 81 à 84 de quatre régénérateurs optiques de type 3R sont remplacées par quatre séries 81' à 84' de quatre moyens standards d'amplification optique.

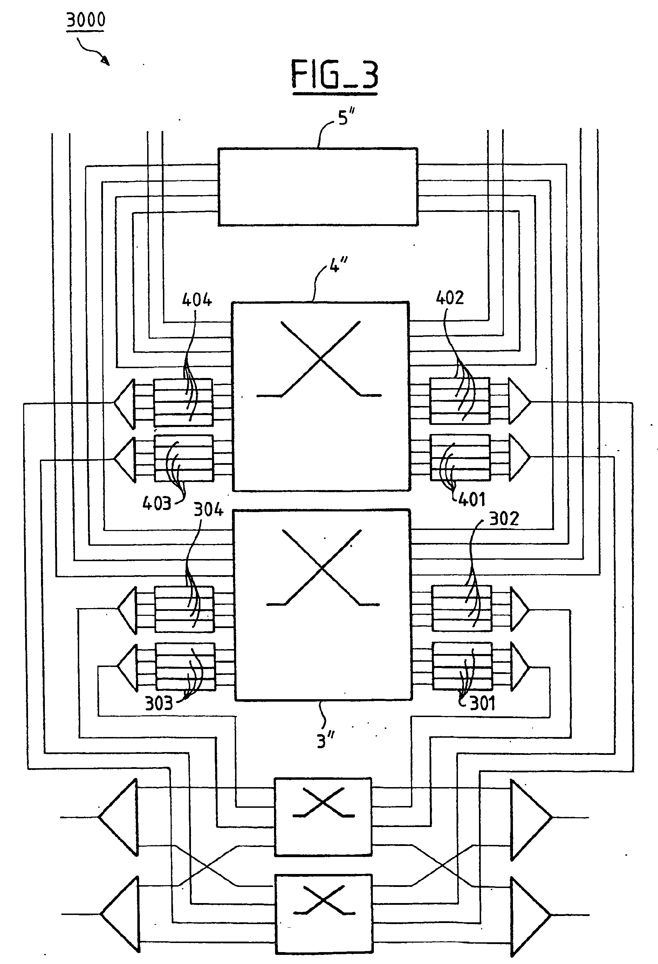

La figure 3 représente schématiquement, dans un troisième mode de réalisation préféré de l'invention, un brasseur optique 3000 de signaux numériques sous forme optique et électrique.

Seuls les éléments différents des éléments du premier mode de réalisation sont référencés.

Le brasseur optique 3000 comporte une matrice électrique de commutation, sous forme d'une série de deux deuxièmes sous matrices électriques 3", 4" respectivement couplées à une sous matrice à redirection distincte.

Quatre séries 301, 302, 401, 402 de convertisseurs optiques-électriques et quatre séries de convertisseurs électriques-optiques 303, 304, 403, 404 sont disposées respectivement au niveau des ports d'aiguillage d'entrée et au niveau des ports d'aiguillage de sortie des deuxièmes sous matrices 3" et 4". Les convertisseurs électriques-optiques remplacent les régénérateurs de type 3R.

Un moyen de commutation inter matrice électrique 5" couple l'ensemble des ports de communication inter matrice d'entrée avec l'ensemble des ports de communication inter matrice de sortie des deuxièmes sous matrices, chaque port de communication inter matrice d'entrée étant apte à recevoir un signal numérique électrique issu de l'autre deuxième sous matrice.

Dans ce troisième mode de réalisation de l'invention, l'emploi des concentrateur et déconcentrateur n'est plus nécessaire.

Bien entendu, l'invention n'est pas limitée aux modes de réalisations qui viennent d'être décrits.

Le nombre de fibres, le nombre de bandes par fibre, le nombre de longueurs d'onde par bande, le nombre de ports d'insertion et des ports d'extraction, le nombre de ports de communication inter matrice sont choisis à titre indicatifs, le dimensionnement pouvant être adapté en fonctions des besoins (densité du trafic par exemple, nombre de réarrangements à opérer etc...).

Les deuxièmes sous matrices peuvent aussi bien est de type « black and white » c'est-à-dire des sous matrices optiques mais avec des interfaces peu coûteuses dont la longueur d'onde n'est pas parfaitement fixée et qui n'autorisent pas l'utilisation de la technique WDM au sein de ces sous matrices.

Le nombre de ports de sortie du concentrateur et le nombre de ports d'entrée du déconcentrateur sont choisis en fonction des fluctuations du trafic et de son niveau moyen.

Enfin, on pourra remplacer tout moyen par un moyen équivalent sans sortir du cadre de l'invention.

## Revendications

1. Brasseur optique (1000, 2000, 3000) d'architecture multigranulaire comportant :
- un premier étage (100) pour la commutation en bande de longueurs d'onde, étage comportant :
- une matrice optique de commutation en bande de longueurs d'onde, dite première matrice, ayant des premiers ports, dits d'aiguillage, d'entrée (1a à 2b) et des premiers ports, dits d'aiguillage, de sortie (1'a à 2'b) ainsi que des deuxièmes ports, dits de redirection, d'entrée (11 à 22) et des deuxièmes ports, dits de redirection, de sortie (11' à 22'),
- des moyens de démultiplexage en bande de longueurs d'onde (10, 20) ayant p groupe(s) de n sorties associées à n bandes de longueurs d'onde distinctes, chacune des sorties étant connectée à un port d'aiguillage d'entrée distinct de la première matrice,
- des moyens de multiplexage en bande de longueurs d'onde (10', 20') ayant p groupe(s) de n entrées chacune connectée à un port d'aiguillage de sortie distinct de la première matrice,
- un deuxième étage (200) pour la commutation en longueur d'onde, étage comportant :
- une matrice de commutation en longueur d'onde, dite deuxième matrice, ayant des premiers ports, dits d'aiguillage, d'entrée (3a à 4b) et des premiers ports, dits d'aiguillage, de sortie (3'a à 4'b),
- des moyens de démultiplexage en longueur d'onde (30 à 60), dont chaque entrée est connectée à un port de redirection de sortie distinct de la première matrice et dont chacune des sorties est connectée à un port d'aiguillage d'entrée distinct de la deuxième matrice,
- des moyens de multiplexage en longueur d'onde (30' à 60'), dont chacune des entrées est connectée à un port d'aiguillage de sortie distinct de la deuxième matrice et dont chaque sortie est connectée à un port de redirection d'entrée distinct de la première matrice,
**caractérisé en ce que** la première matrice comporte une série de premières sous matrices optiques de commutation disposées en parallèle (1, 2),
**en ce que** la deuxième matrice comporte une série de deuxièmes sous matrices de commutation disposées en parallèle (3 à 4"),
**et en ce que** ladite série de premières sous matrices (1, 2) comprend n premières sous matrices, chacune étant dédiée à l'une distincte desdites n bandes de longueurs d'onde et comprenant p desdits ports d'aiguillage d'entrée et p desdits ports d'aiguillage de sortie, et **en ce qu'**au moins deux des premières sous matrices, dites à redirection, comprennent chacune au moins l'un distinct desdits ports de redirection d'entrée et au moins l'un distinct desdits ports de redirection de sortie et sont couplées respectivement à des deuxièmes sous matrices distinctes lesquelles font parti de ladite série de deuxièmes sous matrices (3 à 4").

2. Brasseur (1000, 2000, 3000) selon la revendication 1, **caractérisé en ce qu'**au moins deux des deuxièmes sous matrices (3 à 4") comprennent chacune au moins un port de communication inter matrice d'entrée (41, 42, 4e) et au moins un port de communication inter matrice de sortie (41', 42', 4s), chaque port de communication inter matrice d'entrée étant apte à recevoir un signal porteur d'informations issu d'une desdites deuxièmes sous matrices et chaque port de communication inter matrice de sortie étant apte à délivrer un signal porteur d'informations destiné à l'une desdites deuxièmes sous-matrices.

3. Brasseur (1000, 2000, 3000) selon la revendication 2 **caractérisé en ce qu'**il comporte un moyen de commutation dit inter matrice (5, 5', 5") couplant l'ensemble desdits ports de communication inter matrice d'entrée avec l'ensemble desdits ports de communication inter matrice de sortie.

4. Brasseur (2000) selon la revendication 3 **caractérisé en ce que**, les signaux porteurs d'informations étant optiques, le brasseur peut comprendre un concentrateur optique de signaux optiques (6')couplant l'ensemble des ports de communication inter matrice de sortie avec les entrées du moyen de commutation inter matrice (5') et un déconcentrateur optique (7') de signaux optiques couplant les sorties du moyen de commutation inter matrice avec l'ensemble des ports de communication inter matrice d'entrée.

5. Brasseur (2000) selon la revendication 3, **caractérisé en ce que**, les signaux porteurs d'informations étant optiques, le moyen de commutation inter matrice (5') comprend des moyens de conversion en longueur d'onde.

6. Brasseur (1000) selon la revendication 1, **caractérisé en ce qu'**il comprend des moyens de conversion en longueur d'onde (81 à 84) lorsque les signaux porteurs d'informations sont optiques et numériques, lesdits moyens étant disposés entre des ports d'aiguillages de sortie de deuxièmes sous matrices (3, 4) et les moyens de multiplexage en longueur d'onde (40 à 60).

7. Brasseur (3000) selon la revendication 1, **caractérisé en ce que**, lesdites deuxièmes sous matrices étant électriques (3", 4"), des convertisseurs optiques-électriques (301 à 402) et des convertisseurs électriques-optiques (303 à 404) sont disposés respectivement au moins au niveau des ports d'aiguillage d'entrée et au moins au niveau des ports d'aiguillage de sortie desdites deuxièmes sous matrices.

8. Brasseur (1000) selon la revendication 1, **caractérisé en ce qu'**il comprend un concentrateur optique (6) dont des entrées (61 à 64) sont connectées à un ensemble de ports de sortie, dits ports d'extraction (3'c à 4'd), desdites deuxièmes sous matrices, et un déconcentrateur optique (7) dont des sorties (71' à 74') sont connectées à un ensemble de ports d'entrée (3c à 4d), dits ports d'insertion, desdites deuxièmes sous matrices.

## Claims

1. An optical cross-connect unit of multigranular architecture (1000, 2000, 3000) comprising:
- a first stage (100) for switching wavelength bands and comprising:
- a switching optical matrix, called first matrix for switching wavelength bands and having first input ports called input switch ports (1a to 2b) and first output ports called output switch ports (1'a to 2'b) and second input ports called input redirection ports (11 to 22) and second output ports called output redirection ports (11' to 22'),
- demultiplexer means (10, 20) for demultiplexing wavelength bands and having p groups of n outputs associated with n distinct wavelength bands, each output being connected to a distinct input switch port of the first matrix,
- multiplexer means (10', 20') for multiplexing wavelength bands and having p groups of n inputs each connected to a distinct output switch port of the first matrix,
- a second stage (200) for switching wavelengths and comprising:
- a switching matrix for wavelength switching, called second matrix and having first input ports, called input switch ports (3a to 4b) and first output ports called output switch ports (3'a to 4'b),
- demultiplexer means (30, 60) for wavelength demultiplexing wherein each input is connected to a distinct output redirection port of the first matrix and wherein each output is connected to a distinct input switch port of the second matrix,
- multiplexer means (30', 60') for wavelength multiplexing wherein each input is connected to a distinct output switch port of the second matrix and wherein each output is connected to a distinct input redirection port of the first matrix,
**characterized in that** the first matrix includes a series of first optical switching submatrices (1, 2) disposed in parallel
**in that** the second matrix includes a series of second switching submatrices (3 to 4") disposed in parallel, and
**in that** said series of first submatrices (1, 2) includes n first submatrices, each dedicated to a distinct one of said n wavelength bands and including p of said input switch ports and p of said output switch ports, and **in that** at least two of the first submatrices, called redirection submatrices, each includes at least one of said distinct input redirection ports and at least one of said distinct output redirection ports, and each of which is coupled to a distinct one of the second submatrices which form part of said series of second submatrices, respectively.

2. A cross-connect unit (1000, 2000, 3000) according to claim 1, **characterized in that** each of at least two of the second submatrices (3 to 4") includes at least one inter-input-matrix communications port (41, 42, 4e) and at least one inter-output-matrix communications port (41', 42', 4s), each inter-input-matrix communications port being adapted to receive an information carrier signal from one of said second submatrices and each inter-output-matrix communications port being adapted to deliver an information carrier signal addressed to one of said second submatrices.

3. A cross-connect unit (1000, 2000, 3000) according to claim 2, **characterized in that** it includes intermatrix switching means (5, 5', 5") coupling all of said inter-input-matrix communications ports to all of said inter-output-matrix communications ports.

4. A cross-connect unit (2000) according to claim 3, **characterized in that** the information carrier signals are optical signals and the cross-connect unit can include an optical concentrator (6') for concentrating optical signals coupling all the inter-output-matrix communications ports to the inputs of the intermatrix switching means (5') and an optical deconcentrator (7') for deconcentrating optical signals coupling the outputs of the intermatrix switching means to all the inter-input-matrix communications ports.

5. A cross-connect unit (2000) according to claim 3, **characterized in that** the information carrier signals are optical signals and the intermatrix switching means (5') include wavelength conversion means.

6. A cross-connect unit (1000) according to claim 1, **characterized in that** it includes wavelength conversion means (81 to 84) when the information carrier signals are optical digital signals, said means being disposed between output switch ports of the second submatrices (3, 4) and the wavelength multiplexer means (40 to 60).

7. A cross-connect unit (3000) according to claim 1, **characterized in that** said second submatrices (3", 4") are electrical and optical-electrical converters (301 to 402) and electrical-optical converters (303 to 404) are respectively disposed at least at the level of the input switch ports and at least at the level of the output switch ports of said second submatrices.

8. A cross-connect unit (1000) according to claim 1, **characterized in that** it includes an optical concentrator (6) whose inputs (61 to 64) are connected to a set of output ports, called extraction ports (3'c to 4'd) of said second submatrices and an optical deconcentrator (7) the outputs of which (71' to 74') are connected to a set of input ports, called insertion ports (3c to 4d) of said second submatrices.

## Patentansprüche

1. Optischer Crossconnect (1000, 2000, 3000) mit multigranularer Architektur, bestehend aus:
- einer ersten Stufe (100) für die Wellenband-Schaltung, wobei diese Stufe umfasst:
- eine optische Wellenband-Schaltmatrix, die so genannte erste Matrix, mit ersten so genannten Eingangs-Vermittlungsanschlüssen (1a bis 2b) und ersten so genannten Ausgangs-Vermittlungsanschlüssen (1'a bis 2'b) sowie zweiten, so genannten Eingangs-Umleitungsanschlüssen (11 bis 22) und zweiten, so genannten Ausgangs-Umleitungsanschlüssen (11' bis 22').
- Vorrichtungen zum Wellenband-Demultiplexing (10, 20) mit p Gruppen zu n Ausgängen, die n unterschiedlichen Wellenbändern zugeordnet sind, wobei jeder Ausgang mit einem unterschiedlichen Vermittlungsanschluss der ersten Matrix verbunden ist,
- Vorrichtungen zum Wellenband-Multiplexing (10', 20') mit p Gruppen zu n Ausgängen, von denen jeder mit einem unterschiedlichen Ausgangs-Vermittlungsanschluss der ersten Matrix verbunden ist,
- eine zweite Stufe (200) für die Wellenlängen-Schaltung, wobei diese Stufe umfasst:
- eine Wellenlängen-Schaltmatrix, die so genannte zweite Matrix, mit ersten, so genannten Eingangs-Vermittlungsanschlüssen (3a bis 4b) und ersten, so genannten Ausgangs-Vermittlungsanschlüssen (3'a bis 4'b),
- Vorrichtungen zum Wellenlängen-Demultiplexing (30 bis 60), deren Eingänge jeweils mit einem unterschiedlichen Ausgangs-Umleitungsanschluss der ersten Matrix verbunden sind und deren Ausgänge jeweils mit einem unterschiedlichen Eingangs-Vermittlungsanschluss der zweiten Matrix verbunden sind,
- Vorrichtungen zum Wellenlängen-Multiplexing (30' bis 60'), deren Eingänge jeweils mit einem unterschiedlichen Ausgangs-Vermittlungsanschluss der zweiten Matrix verbunden sind und deren Ausgänge jeweils mit einem unterschiedlichen Eingangs-Umleitungsanschluss der ersten Matrix verbunden sind,
**dadurch gekennzeichnet, dass** die erste Matrix eine Serie von ersten optischen Schalt-Untermatrices umfasst, die parallel angeordnet sind (1, 2),
**sowie dadurch, dass** die zweite Matrix eine Serie von zweiten Schalt-Untermatrices umfasst, die parallel angeordnet sind (3 bis 4''),
**sowie dadurch, dass** die genannte Serie mit ersten Untermatrices (1, 2) n erste Untermatrices umfasst, wobei jede für ein anderes der genannten n Wellenbänder bestimmt ist und p genannte Eingangs-Vermittlungsanschlüsse und p genannte Ausgangs-Vermittlungsanschlüsse umfasst, sowie dadurch, dass mindestens zwei der ersten, so genannten Umleitungs-Untermatrices jeweils mindestens einen der genannten, unterschiedlichen Eingangs-Umleitungsanschlüsse und mindestens einen der genannten, unterschiedlichen Ausgangs-Umleitungsanschlüsse umfassen und jeweils mit den zweiten unterschiedlichen Untermatrices verbunden sind, die zu der genannten Serie mit zweiten Untermatrices gehören.

2. Crossconnect (1000, 2000, 3000) gemäß Anspruch 1, **dadurch gekennzeichnet, dass** mindestens eine der beiden zweiten Untermatrices (3 bis 4") jeweils mindestens eine Matrix-Eingangsschnittstelle (41, 42, 4e) sowie mindestens eine Matrix-Ausgangsschnittstelle (41', 42', 4s) umfasst, wobei jede Matrix-Eingangsschnittstelle in der Lage ist, ein Informations-Trägersignal von einer der genannten zweiten Untermatrices zu empfangen und jede Matrix-Ausgangsschnittstelle in der Lage ist, ein Informations-Trägersignal an eine der genannten zweiten Untermatrices zu übertragen.

3. Crossconnect (1000, 2000, 3000) gemäß Anspruch 2, **dadurch gekennzeichnet, dass** er eine Matrix-Schaltvorrichtung (5, 5', 5'') umfasst, die sämtliche genannten Matrix-Eingangsanschlüsse mit den genannten Matrix-Ausgangsanschlüssen verbindet.

4. Crossconnect (2000) gemäß Anspruch 3, **dadurch gekennzeichnet, dass** die Informations-Trägersignale optisch sind, wobei der Crossconnect einen optischen Konzentrator für optische Signale (6') umfassen kann, der sämtliche Matrix-Ausgangsschnittstellen mit den Eingängen der Matrix-Schaltvorrichtung (5') verbindet, sowie einen optischen Dekonzentrator (7') für optische Signale, der die Ausgänge der Matrix-Schaltvorrichtung mit sämtlichen Matrix-Eingangsschnittstellen verbindet.

5. Crossconnect (2000) gemäß Anspruch 3, **dadurch gekennzeichnet, dass** die Informations-Trägersignale optisch sind, wobei die Matrix-Schaltvorrichtung (5') Vorrichtungen zur Umwandlung der Wellenlänge beinhaltet.

6. Crossconnect (1000) gemäß Anspruch 1, **dadurch gekennzeichnet, dass** er Vorrichtungen zur Umwandlung der Wellenlänge (81 bis 84) umfasst, wenn die Informations-Trägersignale optisch und digital sind, wobei die genannten Vorrichtungen zwischen den Ausgangs-Vermittlungsanschlüssen der zweiten Untermatrices (3, 4) und den Vorrichtungen zum Wellenlängen-Multiplexing (40 bis 60) angeordnet sind.

7. Crossconnect (3000) gemäß Anspruch 1, **dadurch gekennzeichnet, dass** die genannten zweiten Untermatrices elektrisch sind (3", 4") und optisch-elektrische Wandler (301 bis 402) und elektrisch-optische Wandler (303 bis 404) im Bereich der Eingangs-Vermittlungsanschlüsse bzw. mindestens im Bereich der Ausgangs-Vermittlungsanschlüsse der genannten zweiten Untermatrices angeordnet sind.

8. Crossconnect (1000) gemäß Anspruch 1, **dadurch gekennzeichnet, dass** er einen optischen Konzentrator (6) umfasst, dessen Eingänge (61 bis 64) mit einer Gruppe von Ausgangsanschlüssen, den so genannten Extraktionsanschlüssen (3'c bis 4'd) der genannten zweiten Untermatrices verbunden sind, sowie einen optischen Dekonzentrator (7), dessen Ausgänge (71' bis 74') mit einer Gruppe von Ausgangsanschlüssen (3c bis 4d), den so genannten Einfügeanschlüssen der genannten zweiten Untermatrices verbunden sind.
